# EUROPEAN PATENT APPLICATION

(11) **EP 4 205 544 A1**
(43) Date of publication of application: **05.07.2023**
(21) Application number: 21861850.2
(22) Date of filing: 21.06.2021
(51) Int. Cl.: A01K 97/10, A01K 87/08, A41D 13/08

(54) **WRIST GUARD FOR FISHING**

(30) Priority: 28.08.2020 KR 20200109337
(71) Applicant: Lee, Seuk Jong, Seoul 07653 (KR)
(72) Inventor: Lee, Seuk Jong, Seoul 07653 (KR)
(74) Representative: Abel & Imray LLP
(86) International application number: PCT/KR2021/007714
(87) International publication number: WO 2022/045549

(57) **Abstract**

The technical purpose of the present disclosure is to provide a wrist guard for fishing, which can not only protect a wrist but also fix a fishing rod to come into close contact with the wrist without movement, during fishing. To this end, the wrist guard for fishing of the present disclosure, which protects a wrist and supports a fishing rod to the wrist, comprises: a fishing rod wrapping member for wrapping the fishing rod; and a main wrapping member for wrapping the fishing rod wrapping member, which is located between the main wrapping member and the wrist, and the wrist together.

## Description

### Technical Field

The present disclosure relates to fishing.

### Background Art

In general, fishing is the act of catching fish. In order to do such fishing, a fishing rod, a reel, and fishing gear (fishing line, sinker or fishing hook, etc.) are required.

That is, in configuring the fishing gear to the fishing rod, the fishing gear is configured to be connected to the fishing rod in the order of a fishing line, a float, a sinker, a fishing swivel, and a fishing hook. Therefore, the sinker made of a weight body is connected to the fishing line that normally sinks in water so that the fishing line can sink in water, and the fishing hook is connected to a snell at a lower part of the fishing line, so that fishing can be done. On the other hand, when a user (fisherman, angler, etc.) holds the fishing rod by one hand for a long time, the wrist may be strained, so the user usually wears a wrist guard for sports. For reference, when a user repeatedly sinks and raises a fishing rod equipped with a reel, bait, and a sinker in water (including sea water) to catch fish for about 8 hours a day, fatigue accumulates in the wrist and causes considerable pain.

A conventional wrist guard for sports has a structure that wraps the wrist. Specifically, the conventional wrist guard for sports is worn on the wrist and serves to partially support the weight of the fishing rod as needed. The conventional wrist guard for sports is separated from the fishing rod, so there is insufficient wrist protection when used for a long time with the separated state, and thus a new structure of wrist guards exclusively for fishing is required.

### Disclosure

### Technical Problem

Accordingly, the present disclosure has been made keeping in mind the above need, and the present disclosure is intended to provide a wrist guard for fishing, the wrist guard being coupleable to a handle of a fishing rod, thereby distributing a load applied from a sinker to the fishing rod to protect the wrist and also increasing fishing sensitivity transmitted from the sinker (i.e., sensitivity that can protect a floor shape of the sea, line tangle with the next angler, bites of fish, etc.), thereby arousing interest of fishing.

Another objective of the present disclosure is to provide a wrist guard for fishing, the wrist guard being capable of not only protecting the wrist during fishing but also holding a fishing rod in close contact with the wrist without movement.

### Technical Solution

In order to achieve the above objectives, a wrist guard for fishing according to an embodiment of the present disclosure is provided to protect the wrist and support the fishing rod to the wrist, and includes: a fishing rod wrapping member wrapping the fishing rod; and a main wrapping member wrapping the fishing rod wrapping member and the body part together, the fishing rod wrapping member being located between the main wrapping member and the body part.

According to the embodiment of the present disclosure, the wrist guard for fishing may include a connection part detachably connecting the fishing rod wrapping member to the main wrapping member.

The connection part may be made of a material or a structure that is deformable corresponding to a wrapping shape while the main wrapping member wraps the fishing rod wrapping member and the wrist together.

The connection part may include: a first connection through part provided in the fishing rod wrapping member; a second connection through part provided in the main wrapping member; a first connection ring inserted into the first connection through part; a second connection ring inserted into the second connection through part; and a rotation connector detachably connecting the first connection ring and the second connection ring to each other and adding freedom of rotation to the first, second connection ring.

The rotation connector may include a first rotation ring connected to the first connection ring; a rotational shaft member connected, at a first end thereof, to the first rotation ring such that the first rotation ring is rotatable on the shaft; a second rotation ring connected, at a second end of the rotational shaft member to be rotatable on the shaft; and a fastening member of which a ring at a first end may be connected to the second rotation ring and a hook at a second end is selectively opened and closed, the fastening member being detachably connected to the second connection ring.

According to the embodiment of the present disclosure, the wrist guard for fishing may include a friction member provided on an inner surface of the fishing rod wrapping member, on which the fishing rod is placed.

The first connection through part may be sewn on the inner surface of the fishing rod wrapping member.

Each of the fishing rod wrapping member and the main wrapping member may include an attaching and detaching part, and the attaching and detaching part may include a female type Velcro (which may be referred to as "smooth part") provided on an inner surface of the wrapping member, which faces the inside during wrapping; and a male type Velcro (which may be referred to as "rough part") provided on an outer surface of the wrapping member, which faces the inside during wrapping and attached to the female Velcro.

### Advantageous Effects

As described above, the wrist guard for fishing according to the embodiment of the present disclosure may have following effects.

According to the embodiment of the present disclosure, for the wrist guard for fishing protecting the wrist and supporting the fishing rod at the wrist, there is provided the technical configuration including the fishing rod wrapping member and the main wrapping member. Therefore, while the fishing rod wrapping member wraps the fishing rod, the wrist is located to be contact therewith and then the main wrapping member can wrap the fishing rod wrapping member and the wrist together, and the fishing rod wrapping member can be held between the wrist and the main wrapping member and the fishing rod are held together. Accordingly, not only the wrist can be protected during fishing but also the fishing rod can be held at the wrist without movement, and also the fishing rod is brought into close contact with the wrist and thus fishing sensitivity to bites can be increased.

Furthermore, according to the embodiment of the present disclosure, there is provided the technical configuration including the connection part, so that the fishing rod wrapping member and the main wrapping member can be detachably connected to each other. Therefore, the loss of each part can be prevented by the connection of the connection part, and the fishing rod wrapping member is coupled to the fishing rod in advance and then the fishing rod wrapping member is coupled thereto on board ship by separation of the connection part, thereby improving ease of use.

Furthermore, according to the embodiment of the present disclosure, there is provided the technical configuration in which the connection part is made of a material or a structure that is deformable. Therefore, the shape of the connection part can be changed corresponding to the wrapping shape when the main wrapping member wraps the fishing rod wrapping member and the wrist, thereby minimizing interruption from the connection part and increasing an adhesion between the parts. Accordingly, it is possible to improve not only a holding force for the fishing rod but also the fishing sensitivity to bites.

Furthermore, according to the embodiment of the present disclosure, there is provided the technical configuration including the friction member. Therefore, when the fishing rod is placed on the inner surface of the fishing rod wrapping member, the fishing rod is brought into contact with the friction member so as to prevent movement of the fishing rod, so that holding force of the fishing rod can be increased.

Furthermore, according to the embodiment of the present disclosure, there is provided the technical configuration in which the first connection through part, which is a component of the connection part, is sewn on the inner surface of the fishing rod wrapping member on which the fishing rod is placed. Therefore, interruption from the connection part during wrapping the fishing rod by the fishing rod wrapping member can be prevented.

Furthermore, according to the embodiment of the present disclosure, when the main wrapping member of the wrist guard for fishing of the present disclosure is worn into a shape wrapping the forearm instead of the wrist, an effect in which a length of the close contact portion of the fishing rod from the hand to the wearing point of the forearm is elongated can cause an effect in which the sensitivity of fishing is increased.

### Description of Drawings

FIG. 1 is a development view schematically showing a wrist guard for fishing according to an embodiment of the present disclosure.
FIG. 2 is a view schematically showing a fishing rod wrapping member wrapping a fishing rod, of the wrist guard for fishing in FIG. 1.
FIG. 3 is a view schematically showing the fishing rod in FIG. 2, which is gripped with one hand and located at the wrist.
FIG. 4 is a view schematically showing a process in which a main wrapping member in FIG. 3 is gripped with another hand and wraps the fishing rod wrapping member and the wrist together.
FIG. 5 is a view schematically showing the main wrapping member in FIG. 4, which is fully wrapped.
FIG. 6 is a view schematically showing the wrist guard for fishing in FIG. 1 according to another embodiment, which is worn on the forearm of a user.

### Mode for Invention

Hereinbelow, an exemplary embodiment of the present disclosure will be described in detail with reference to accompanying drawings such that the present disclosure can be easily embodied by one of ordinary skill in the art to which the present disclosure belongs. However, the present disclosure may be variously embodied without being limited to the exemplary embodiment.

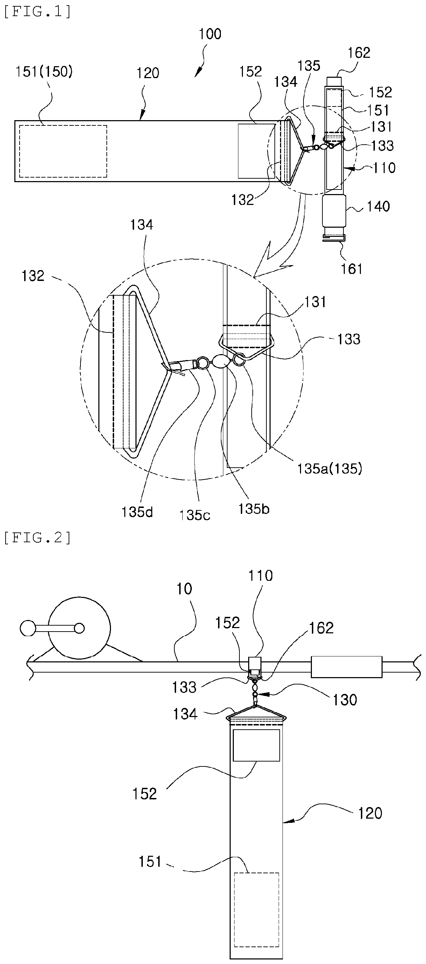

FIG. 1 is a development view schematically showing a wrist guard for fishing according to an embodiment of the present disclosure. FIG. 2 is a view schematically showing a fishing rod wrapping member wrapping a fishing rod, of the wrist guard for fishing in FIG. 1.

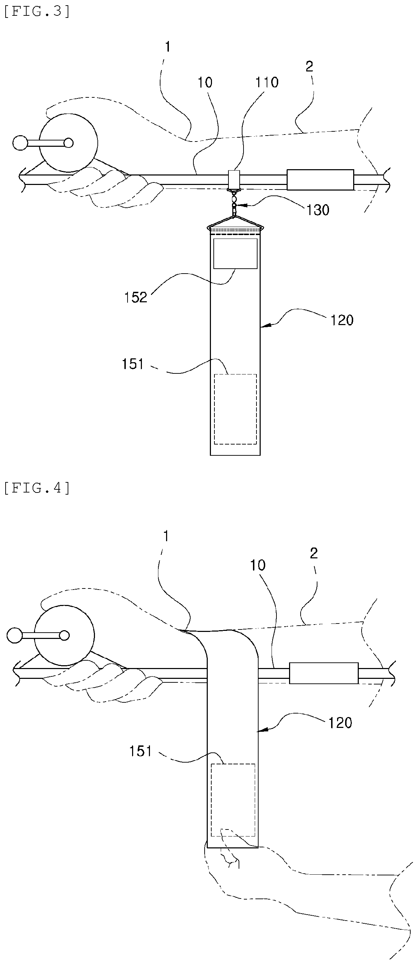

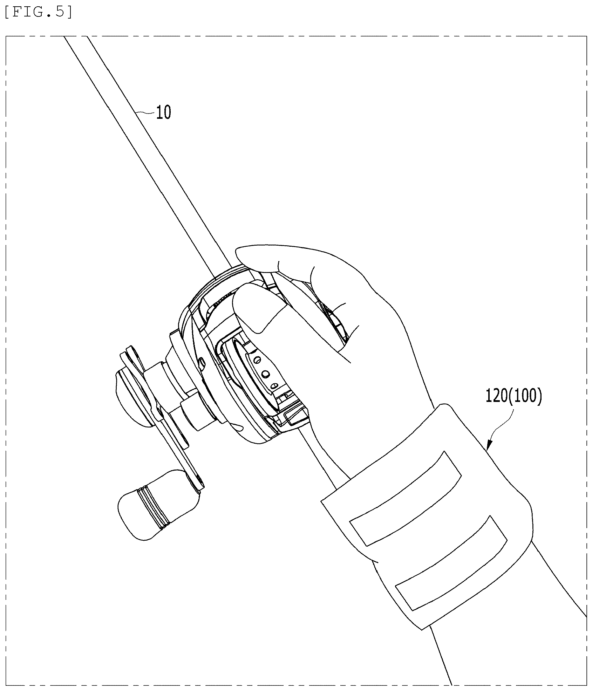

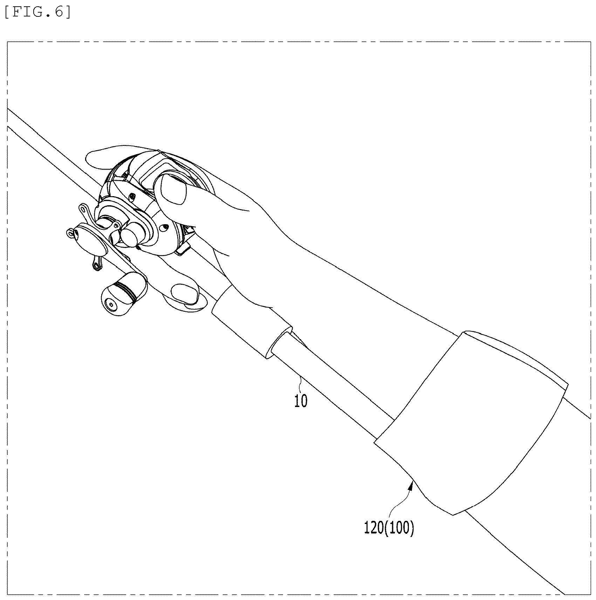

FIG. 3 is a view schematically showing the fishing rod in FIG. 2 which is gripped with one hand and located at the wrist. FIG. 4 is a view schematically showing a process in which the main wrapping member in FIG. 3 is gripped with another hand and wraps the fishing rod wrapping member and the wrist together. FIG. 5 is a view schematically showing the main wrapping member in FIG. 4, which is fully wrapped. FIG. 6 is a view schematically showing the wrist guard for fishing in FIG. 1 according to another embodiment, which is worn on the forearm of a user.

According to the embodiment of the present disclosure, as shown in FIGS. 1 to 5, a wrist guard for fishing 100 is a device for protecting the wrist 1 and supporting a fishing rod 10 at the wrist 1, and includes a fishing rod wrapping member 110 and a main wrapping member 120. Referring to FIGS. 1 to 5, each component is described in detail.

The fishing rod wrapping member 110 is a component to wrap the circumference of a part of the fishing rod 10. As shown in FIG. 1, the fishing rod wrapping member 110 may have a strap shape consisting of predetermined size and width, and be made of a fabric material, a leather material, and the like. Moreover, as shown in FIGS. 1 and 2, opposite ends of the fishing rod wrapping member 110 may be attached to or detached from each other by an attaching and detaching part 150. Furthermore, as shown in FIG. 1, a first end of the fishing rod wrapping member 110 includes a catching member 161 so as to, when the fishing rod wrapping member 110 is wrapped, pass a part of the fishing rod wrapping member 110 therethrough and catch the part, and a second end of the fishing rod wrapping member 110 may include a handle 162 to allow the hand to easily grip the fishing rod wrapping member 110.

As shown in FIGS. 3 to 5, the main wrapping member 120 is a component that wraps the fishing rod wrapping member 110 and the wrist 1 together, when the fishing rod wrapping member 110 is located between the wrist 1 and the main wrapping member 120. As shown in FIG.1, the main wrapping member 120 may have a strap shape consisting of a larger width and length than the width and length of the fishing rod wrapping member 110, and may be made of a fabric material, leather material, and the like. Moreover, opposite ends of the main wrapping member 120 may be attached to and detached from each other by the attaching and detaching part 150.

Therefore, as above-described components are provided, as shown in FIG. 3, while the fishing rod 10 is wrapped with the fishing rod wrapping member 110, the fishing rod 10 and the fishing rod wrapping member 110 are located to be in contact with the wrist 1. Then, as shown in FIGS. 4 and 5, the main wrapping member 120 may wrap the fishing rod wrapping member 110 and the wrist 1 together, so that the fishing rod wrapping member 110 is held between the wrist 1 and the main wrapping member 120 and the fishing rod 10 may be held together with the fishing rod wrapping member 110. Eventually, during fishing, it is possible to not only protect the wrist 1 but also hold the fishing rod 10 on the wrist 1 without movement, and also with the fishing rod 10 in close contact with the wrist 1, fishing sensitivity to bites can be increased.

Meanwhile, as another embodiment, as shown in FIG. 6, the wrist guard for fishing 100 of the present disclosure may be worn in the shape in which the main wrapping member 120 thereof wraps the forearm 2 located above the wrist 1. In this case, as a contact area of the fishing rod 10 from the hand to the forearm 2 is elongated, a close contact portion is also elongated and thus the sensitivity of fishing can be increased.

In addition, according to the embodiment of the present disclosure, the wrist guard for fishing 100 may include a connection part 130 as shown in FIG. 1. The connection part 130 may detachably connect the fishing rod wrapping member 110 and the main wrapping member 120 to each other. Therefore, separation of each part can be prevented by connecting of the connection part 130, and cleaning of each part can be easily performed by separating of the connection part 130. In addition, by separating the connection part 130, the fishing rod wrapping member 110 is coupled to the fishing rod 10 in advance and then the main wrapping member 120 may be coupled thereto on board ship, thereby improving ease of use.

Only the main wrapping member 120 is worn around the wrist 1 so that the main wrapping member can be individually used to protect the wrist 1.

Moreover, the connection part 130 may be made of a material or a structure that can be deformable corresponding to a wrapping shape when the main wrapping member 120 wraps the fishing rod wrapping member 110 and the wrist 1 together. Therefore, while the main wrapping member 120 wraps the fishing rod wrapping member 110 and the wrist 1 together, the shape of the connection part 130 can be changed corresponding to the wrapping shape, thereby minimizing interruption from the connection part 130 and increasing an adhesion between parts. Accordingly, it is possible to improve not only a holding force for the fishing rod 10 but also the fishing sensitivity to bites.

For example, as shown in FIG. 1, the connection part 130 may include a first connection through part 131, a second connection through part 132, a first connection ring 133, a second connection ring 134, and a rotation connector 135. The first connection through part 131 may be provided in the fishing rod wrapping member 110, and the second connection through part 132 may be provided in the main wrapping member 120. More specifically, the first connection through part 131 may be provided such that a separate member is sewn while being added to the fishing rod wrapping member 110, and the second connection through part 132 may be provided such that an end of the fishing rod the main wrapping member 120 is sewn while being rolled. Specifically, as shown in FIG. 1, the first connection through part 131 may be sewn on an inner surface of the fishing rod wrapping member 110 on which the fishing rod 10 is placed. Accordingly, interruption from the connection part 130 during wrapping the fishing rod 10 by the fishing rod wrapping member 110 can be prevented.

The first connection ring 133 may be inserted into the first connection through part 131, and the second connection ring 134 may be inserted into the second connection through part 132. The rotation connector 135 detachably connects the first connection ring 133 and the second connection ring 134 to each other and may add freedom of rotation to the first, second connection ring 133, 134.

More specifically, as shown in FIG. 1, the rotation connector 135 may include a first rotation ring 135a, a rotational shaft member 135b, a second rotation ring 135c, and a fastening member 135d. The first rotation ring 135a may be connected to the first connection ring 133, the rotational shaft member 135b is connected, at a first end thereof, to the first rotation ring 135a such that the first rotation ring is rotatable on the shaft, and the second rotation ring 135c may be connected to a second end of the rotational shaft member 135b to be rotatable on the shaft. A ring at a first end of the fastening member 135d may be connected to the second rotation ring 135c and a hook at a second end thereof may be detachably connected to the second connection ring 134 while being selectively opened and closed.

In addition, according to the embodiment of the present disclosure, as shown in FIG. 1, the wrist guard for fishing 100 may include a friction member 140. The friction member 140 may be provided on an inner surface of the fishing rod wrapping member 110, on which the fishing rod 10 is placed. Therefore, when the fishing rod 10 is placed on the inner surface of the fishing rod wrapping member 110, the fishing rod is brought into contact with the friction member 140 without movement of the fishing rod 10, so that a holding force of the fishing rod 10 can be increased.

In addition, each of the fishing rod wrapping member 110 and the main wrapping member 120 may include the attaching and detaching part 150, as shown in FIGS. 1 and 2. For example, as shown in FIGS. 1 and 2, the attaching and detaching part 150 may include a female type Velcro 151 (which may be referred to as "smooth part") and a male type Velcro 152 (which may be referred to as "rough part"). The female type Velcro 151 may be provided by being sewn on an inner surface of the wrapping member, which faces the inside during wrapping, and the male type Velcro 152 may be provided at an outer surface of the wrapping member, which faces the outside during wrapping.

Although the preferred embodiment of the present disclosure has been described for illustrative purposes, the patent right of the present disclosure is not limited thereto. Numerous variations and improvements of those skilled in the art using the basic concept of the present disclosure defined in the following claims also belong to the patent right of the present disclosure.

### Industrial Applicability

As the present disclosure relates to fishing, industrial applicability is possible.

## Claims

1. A wrist guard for fishing, which supports a fishing rod to a body part such as the wrist or the forearm, the wrist guard comprising:
a fishing rod wrapping member wrapping the fishing rod; and
a main wrapping member wrapping the fishing rod wrapping member and the body part together, the fishing rod wrapping member being located between the main wrapping member and the body part.

2. The wrist guard of claim 1, further comprising:
a connection part detachably connecting the fishing rod wrapping member to the main wrapping member.

3. The wrist guard of claim 2, wherein the connection part is made of a material or a structure that is deformable corresponding to a wrapping shape when the main wrapping member wraps the fishing rod wrapping member and the body part together.
